# EUROPÄISCHE PATENTANMELDUNG

(11) **EP 1 016 623 A2**
(43) Veröffentlichungstag der Anmeldung: **05.07.2000**
(21) Anmeldenummer: 99124436.9
(22) Anmeldetag: 08.12.1999
(51) Int. Cl.: C01B 25/165, C07F 9/48, C07F 9/30

(54) **Verfahren zur Herstellung von Phosphinsäuren**

(30) Priorität: 31.12.1998 DE 19860949; 18.11.1999 DE 19955741
(71) Anmelder: Clariant GmbH, 65929 Frankfurt am Main (DE)
(72) Erfinder: Schmitz, Hans-Peter, 50321 Brühl (DE); Sicken, Martin, Dr., 51149 Köln (DE)

(57) **Zusammenfassung**

Die vorliegende Erfindung betrifft ein Verfahren zur Herstellung von Phosphinsäuren aus Alkaliphosphinaten, dadurch gekennzeichnet, daß man Alkaliphoshinate in einem polaren Lösungsmittel mit einer anorganischen Mineralsäure umsetzt und anschließend die entstandene Phosphinsäure abtrennt.

Die Erfindung betrifft ebenfalls die Verwendung der nach diesem Verfahren hergestellten Phosphinsäuren.

## Beschreibung

Die vorliegende Erfindung betrifft ein Verfahren zur Herstellung von Phosphinsäuren aus Alkaliphosphinaten und die Verwendung der nach diesem Verfahren hergestellten Phosphinsäuren.

Unter Phosphinsäuren versteht man sowohl die Phosphinsäure selber ( 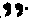 Hypophosphorige Säure", H₃PO₂, Formel 1) als auch ihre organisch substituierten Derivate. Die Phosphinsäure ist ein großtechnisch hergestelltes Produkt, das beispielsweise in großen Mengen als Reduktionsmittel zur stromlosen Vernickelung eingesetzt wird.

Die organisch substituierten Derivate der Phosphinsäure, wie Methylphosphinsäure auch 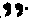 Methylphosphonige Säure" genannt (CH₃PO₂H₂; Formel 2, R=Methyl) sowie die Dialkylphosphinsäuren (R₂PO₂H; Formel 3) haben umfangreiche technische Bedeutung als Zwischenprodukte, etwa zur Herstellung von Herbiziden und Flammschutzmitteln sowie als Extraktionsmittel erlangt.

Die verschiedenen Phosphinsäuren sind zusammengefaßt durch die nachstehenden Formeln 1 bis 3 wiedergegeben.

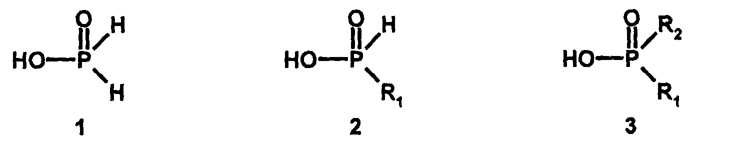

Für die Herstellung von Phosphinsäuren werden zahlreiche Verfahren beschrieben (Gmelins Handbuch der Anorganischen Chemie, 8. Aufl., Bd 16, Tl C, S. 94-96).

So kann Phosphinsäure durch Kationenaustausch an einem sauren Ionentauscher-Harz aus Natriumphosphinat hergestellt werden (R. Klement, Z.anorg.Ch. 260 [1949] 267/72).

Nachteilig sind die benötigten hohen Mengen an Ionenaustauscher-Harz mit entsprechend niedrigen Raum/Zeit-Ausbeuten und die Notwendigkeit einer aufwendigen Abwasserbehandlung zur Phosphorentfernung.

Weiterhin wird die Umsetzung von Natriumhypophosphit mit Schwefelsäure beschrieben, wobei zur Entfernung von Sulfat aber der Einsatz von Barium-Ionen notwendig ist, was eine teure und aufwendige Aufarbeitung mit der Entsorgung von Bariumsulfat-Schlämmen zur Folge hat.

Die US-A-5,578,182 beschreibt ein Verfahren zur Herstellung von Phosphinsäure, das auf der elektrochemischen Umsetzung von Natriumphosphinat zu Phosphinsäure mittels einer aufwendigen Elektrodialyse basiert.

In der DE-OS-4215974 wird ein Verfahren beschrieben, Natriumphosphinat mit wäßriger Salzsäure umzusetzen, durch Einengen dann Natriumchlorid auszufällen und somit nach Filtration eine wäßrige Phosphinsäure zu erhalten. Nachteilig an diesem Verfahren ist unter anderem der Restgehalt an Natriumchlorid in der Phosphinsäure. Daher wird dort vorgeschlagen, die restlichen Chlorid-Ionen durch einen nachgeschalteten Ionenaustausch zu entfernen, was aber einen deutlichen Mehraufwand bedeutet und das Natrium-Ionen-Problem nicht löst, da diese weiterhin im Produkt verbleiben.

Allen zuvor beschriebenen Verfahren ist gemeinsam, daß sie sich entweder komplizierter technischer Maßnahmen bedienen oder in erheblichen Mengen als Nebenprodukte nicht verwertbare Absalze mit sich bringen. Darüber hinaus sind diese Verfahren zur Herstellung der technisch sehr interessanten organisch substituierten Phosphinsäuren nicht anwendbar.

Es ist daher Aufgabe der vorliegenden Erfindung, ein Verfahren zur Herstellung auch organisch substituierter Phosphinsäuren zur Verfügung zu stellen, das auf einfache Art und Weise durchführbar ist und mit dem sich hochreine Produkte erhalten lassen. Alle Produkte, die während des Verfahrens entstehen, sollen wiederverwertbar sein, so daß das Verfahren besonders wirtschaftlich und umweltfreundlich durchführbar ist.

Diese Aufgabe wird gelöst durch ein Verfahren der eingangs genannten Art, welches dadurch gekennzeichnet ist, daß man Alkaliphosphinate in einem polaren Lösungsmittel mit einer anorganischen Mineralsäure umsetzt und anschließend die entstandene Phosphinsäure abtrennt.

Bevorzugt handelt es sich bei dem eingesetzten polaren Lösungsmittel um Essigsäure, Propionsäure und/oder Alkohole. Geeignet sind beispielsweise Ethanol, Propanol, Butanol und andere kurzkettige Alkohole.

Besonders bevorzugt handelt es sich bei den Alkaliphosphinaten um Natriumphosphinate der Formeln 4, 5 und/oder 6, 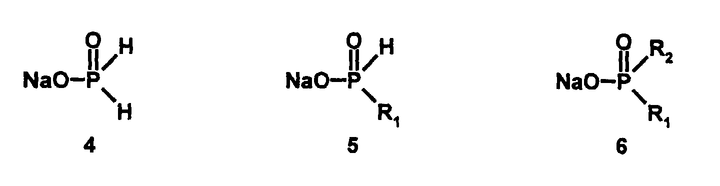 in denen R₁ und R₂ gleich oder verschieden sind und für eine C₁ bis C₂₀-Alkylgruppe (linear, verzweigt oder cyclisch), C₁ bis C₂₀-Aryl- oder C₁ bis C₂₀-Alkylaryl-gruppe stehen.

Bevorzugt handelt es sich bei der anorganischen Mineralsäure um Salzsäure, Schwefelsäure oder Phosphorsäure oder Mischungen davon.

Besonders bevorzugt handelt es sich bei den Alkaliphosphinaten um Phosphinsäure-Natriumsalz, Methylphosphinsäure-Natriumsalz, Methylethylphosphinsäure-Natriumsalz und/oder Diethylphosphinsäure-Natriumsalz.

Bevorzugt setzt man Alkaliphosphinat und anorganische Mineralsäure in equivalenten Mengen miteinander um

Die Erfindung betrifft auch die Verwendung der nach dem vorstehend beschriebenen Verfahren erhaltenen Phosphinsäuren zur Herstellung von Flammschutzmitteln, Pflanzenschutzmitteln und Extraktionsmitteln.

Mit dem erfindungsgemäßen Verfahren wurde nun überraschend gefunden, daß praktisch salzfreie, reine Phosphinsäuren auf einfache Art und Weise aus Alkaliphosphinaten erzeugt werden können, indem man die dort vorhandenen Alkali-Ionen mit anorganischen Mineralsäuren in polaren, bevorzugt sauren organischen Lösungsmitteln ausfällt. Dieses neue Verfahren basiert auf der Tatsache, daß Alkaliphosphinate und deren korrespondierende Phosphinsäuren ausgezeichnet in den vorgenannten Lösungsmitteln löslich sind, die Mineralsalze der Alkalimetalle dagegen praktisch unlöslich sind.

Die Herstellung der Phosphinsäuren kann deshalb in einfacher Weise dadurch erfolgen, daß zu der jeweiligen sauren Lösung des Alkaliphosphinates eine entsprechende equivalente Menge an anorganischer Mineralsäure zugesetzt wird und das dann vollständig ausgefällte Alkalisalz abfiltriert wird. Bei Einsatz leichflüchtiger Mineralsäuren können diese auch im Überschuß eingesetzt werden.

Die so erhaltene Phosphinsäure-Lösung kann entweder ohne weitere Aufarbeitung weiterverarbeitet werden oder aber durch destillatives Entfernen und Wiedergewinnen des eingesetzten Lösungsmittels in die reine, salzfreie Phosphinsäure überführt werden. Eine weitere Reinigung ist in der Regel nicht notwendig, kann aber beispielsweise durch Destillation erfolgen.

Die nach dem erfindungsgemäßen Verfahren ausgefällten Alkalisalze fallen in großer Reinheit an und können nach Waschung und Trocknung beispielsweise als Rohstoff in einer Chloralkali-Elektolyse (NaCl) oder als Füllstoff (Na₂SO₄) wiederverwertet werden.

Das erfindungsgemäße Verfahren bietet somit erhebliche ökonomische und wirtschaftliche Vorteile, da mit geringem Aufwand unter Verwendung einfacher Verfahrenstechniken hochreine Phosphinsäuren erzeugt werden können, als auch umweltrelevante Vorteile, da ausschließlich wiederverwendbare Wertstoffe entstehen. Ein weiterer Vorteil ist daß das erfindungsgemäße Verfahren auf eine große Anzahl an anorganisch als auch organisch substituierte Phosphinsäuren angewendet werden kann.

Vorteilhafterweise werden beim erfindungsgemäßen Verfahren wasserfreie Einsatzstoffe verwendet, da die sofortige vollständige Alkalisalzfällung nur bei niedrigen Wassergehalten möglich ist. Es können aber auch wasserhaltige Alkaliphosphinate oder Phosphinsäuren eingesetzt werden, da eine destillative Entwässerung des eingesetzten vorgenannten Lösungsmittels vor oder nach der Alkalisalzfällung problemlos möglich ist.

Die Erfindung wird durch die nachstehenden Beispiele erläutert.

### Beispiel 1:

In einem 1 l-Dreihalskolben, ausgestattet mit Rührer und Tropftrichter, wird zu einer Lösung von 88 g Natriumphosphinat (1 mol) in 500 ml Essigsäure bei Raumtemperatur unter Rühren innerhalb von 30 min 49 g 98%ige Schwefelsäure (0.5 mol) zugesetzt. Das ausgefallene Salz wird abfiltriert und zweimal mit je 100 ml Essigsäure gewaschen. Nach 2 h Trocknung bei ca. 50 °C im Wasserstrahlvakuum erhält man 71 g (Ausbeute > 99%) Natriumsulfat (Restfeuchte < 0,5%, Reinheit > 99 %).
Die vereinigten Filtrate enthalten 66 g reine Phosphinsäure (³¹P-NMR-Analyse: 14,6 ppm, Reinheit: > 99% Mol-% P). Das Lösungsmittel Essigsäure kann bei 40°C im Vakuum (1 Torr) entfernt werden.

### Beispiel 2:

In einem 1 l-Dreihalskolben, ausgestattet mit Rührer und Tropftrichter, wird zu einer Lösung von 102 g Methylphosphinsäure-Natriumsalz (1 mol) in 500 ml Essigsäure bei Raumtemperatur unter Rühren innerhalb von 30 min 49 g 98%ige Schwefelsäure (0,5 mol) zugesetzt. Das ausgefallene Salz wird abfiltriert und zweimal mit je 100 ml Essigsäure gewaschen. Nach 2 h Trocknung bei ca. 50 °C im Wasserstrahlvakuum erhält man 71 g (Ausbeute > 99%) Natriumsulfat (Restfeuchte < 0,5%, Reinheit > 99 %).
Die vereinigten Filtrate enthalten reine Methylphosphinsäure. Die Essigsäure wird bei ca. 80 °C im Wasserstrahlvakuum abdestilliert und man erhält so 80 g Methylphosphinsäure in Form einer klaren, farblosen Flüssigkeit (³¹P-NMR-Analyse: 33,4 ppm, Reinheit: > 99% Mol-% P; Kp₁: 105°C).

### Beispiel 3:

In einem 1 l-Dreihalskolben, ausgestattet mit Rührer und Tropftrichter, wird zu einer Lösung von 144 g Diethylphosphinsäure-Natriumsalz (1 mol) in 500 ml Essigsäure bei Raumtemperatur unter Rühren innerhalb eines Zeitraumes von 30 min 49 g 98%ige Schwefelsäure (0,5 mol) zugesetzt. Das ausgefallene Salz wird abfiltriert und zweimal mit je 100 ml Essigsäure gewaschen. Nach 2 h Trocknung bei ca. 50 °C im Wasserstrahlvakuum erhält man 71 g (Ausbeute > 99%) Natriumsulfat (Restfeuchte < 0,5%, Reinheit > 99 %).
Die vereinigten Filtrate enthalten reine Diethylphosphinsäure. Die Essigsäure wird bei ca. 100 °C im Wasserstrahlvakuum abdestilliert und man erhält so 122 g Diethylphosphinsäure (Ausbeute > 99%) in Form einer klaren, farblosen Flüssigkeit. (³¹P-NMR-Analyse: 57,4 ppm, Reinheit: > 99% Mol-% P; Kp_{0.4}: 126 °C).

### Beispiel 4:

In einem 1 l-Dreihalskolben, ausgestattet mit Rührer und Tropftrichter, wird zu einer Lösung von 144 g Diethylphosphinsäure-Natriumsalz (1 mol) in 500 ml Essigsäure bei Raumtemperatur unter Rühren innerhalb von 30 min 100 g 36%ige Salzsäure (1 mol) zugesetzt. Anschließend wird das eingetragene Wasser über eine Destillationskolonne abgetrieben. Das ausgefallene Salz wird abfiltriert, zweimal mit je 100 ml Essigsäure gewaschen. Nach 2 h Trocknung bei ca. 50 °C im Wasserstrahlvakuum erhält man 58 g (Ausbeute > 99%) Natriumchlorid (Restfeuchte < 0,5%, Reinheit > 99 %).
Die vereinigten Filtrate enthalten reine Diethylphosphinsäure. Die Essigsäure wird bei ca. 100 °C im Wasserstrahlvakuum abdestilliert und man erhält so 122 g Diethylphosphinsäure (Ausbeute > 99%) in Form einer klaren, farblosen Flüssigkeit (³¹P-NMR-Analyse: 57,4 ppm, Reinheit: > 99% Mol-% P; Kp_{0.4}: 126°C).

### Beispiel 5:

In einem 1 l-Dreihalskolben, ausgestattet mit Rührer und Tropftrichter, wird zu einer Lösung von 106 g Natriumphosphinat-Monohydrat (1 mol) in 500 ml Essigsäure bei Raumtemperatur unter Rühren innerhalb von 30 min 49 g 98%ige Schwefelsäure (0.5 mol) zugesetzt. Anschließend wird das eingetragene Wasser über eine Destillationskolonne abgetrieben. Das ausgefallene Salz wird abfiltriert und zweimal mit je 100 ml Essigsäure gewaschen. Nach 2 h Trocknung bei ca. 50 °C im Wasserstrahlvakuum erhält man 71 g (Ausbeute > 99%) Natriumsulfat (Restfeuchte < 0,5%, Reinheit > 99 %).
Die vereinigten Filtrate enthalten 66 g reine Phosphinsäure. (³¹P-NMR-Analyse: 14,6 ppm, Reinheit: > 99% Mol-% P). Das Lösungsmittel Essigsäure kann bei 40 °C im Vakuum (1 Torr) entfernt werden.

### Beispiel 6:

In einem 1 l-Dreihalskolben, ausgestattet mit Rührer und Tropftrichter, wird zu einer Lösung von 102 g Methylphosphinsäure-Natriumsalz (1 mol) in 400 ml Butanol bei Raumtemperatur unter Rühren innerhalb von 30 min 100 g 36%ige Salzsäure (1 mol) zugesetzt. Anschließend wird das eingetragene Wasser über einen Wasserabscheider abgetrieben. Das ausgefallene Kochsalz wird abfiltriert und zweimal mit je 100 ml Butanol gewaschen. Nach 1 h Trocknung bei ca. 50°C im Wasserstrahlvakuum erhält man 58 g (Ausbeute > 99%) Natriumchlorid (Restfeuchte < 0.1%, Reinheit > 99 %).
Die vereinigten Filtrate enthalten reine Methylphosphinsäure. Das Butanol wird bei ca. 50°C im Wasserstrahlvakuum abdestilliert und man erhält so 80 g Methylphosphinsäure in Form einer klaren, farblosen Flüssigkeit (³¹P-NMR-Analyse: 33.4 ppm, Reinheit: > 99% Mol-% P; Kp₁: 105°C).

## Patentansprüche

1. Verfahren zur Herstellung von Phosphinsäuren aus Alkaliphosphinaten, dadurch gekennzeichnet, daß man Alkaliphoshinate in einem polaren Lösungsmittel mit einer anorganischen Mineralsäure umsetzt und anschließend die entstandene Phosphinsäure abtrennt.

2. Verfahren nach Anspruch 1, dadurch gekennzeichnet, daß es sich bei dem polaren Lösungsmittel um Essigsäure, Propionsäure und/oder Alkohole handelt.

3. Verfahren nach Anspruch 1 oder 2, dadurch gekennzeichnet, daß die Alkaliphosphinate der Formel 4, 5 und/oder 6 entsprechen 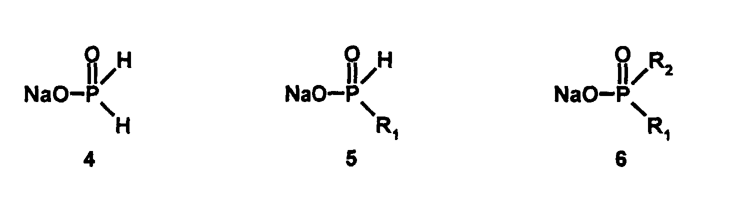 in denen R₁ und R₂ gleich oder verschieden sind und für eine C₁ bis C₂₀-Alkylgruppe (linear, verzweigt oder cyclisch), C₁ bis C₂₀-Aryl- oder C₁ bis C₂₀-Alkylaryl-gruppe stehen.

4. Verfahren nach Anspruch 3, dadurch gekennzeichnet, daß R₁ und R₂ gleich oder verschieden sind und für eine C₁ bis C₆-Alkylgruppe (linear, verzweigt oder cyclisch) stehen.

5. Verfahren nach einem oder mehreren der Ansprüche 1 bis 4, dadurch gekennzeichnet, daß es sich bei der anorganischen Mineralsäure um Salzsäure, Schwefelsäure, Phosphorsäure oder Mischungen davon handelt.

6. Verfahren nach einem oder mehreren der Ansprüche 1 bis 5, dadurch gekennzeichnet, daß es sich bei Alkaliphosphinat um Natriumphosphinat, Methylphosphinsäure-Natriumsalz, Methylethylphosphinsäure-Natriumsalz und/oder Diethylphosphinsäure-Natriumsalz handelt.

7. Verfahren nach einem oder mehreren der Ansprüche 1 bis 6, dadurch gekennzeichnet, daß man Alkaliphosphinat und anorganische Mineralsäure in equivalenten Mengen miteinander umsetzt.

8. Verwendung der nach den Verfahren der Ansprüche 1 bis 7 erhaltenen Phosphinsäuren zur Herstellung von Flammschutzmitteln, Pflanzenschutzmitteln und Extraktionsmitteln.
